# EUROPEAN PATENT APPLICATION

(11) **EP 4 679 127 A2**
(43) Date of publication of application: **14.01.2026**
(21) Application number: 25189013.3
(22) Date of filing: 11.07.2025
(51) Int. Cl.: G01S 7/00, G01S 7/02, G01S 13/04, G01S 13/56, G01S 13/931, H01Q 1/32, H01Q 1/38, H01Q 21/28, G01S 13/86, G01S 7/03, H01Q 1/52, H01Q 15/14, H01Q 21/06

(54) **RADAR AND CELLULAR SYSTEMS**

(30) Priority: 12.07.2024 US 202418771657
(71) Applicant: Harman International Industries, Incorporated, Stamford, CT 06901 (US)
(72) Inventor: TALEB-BENDIAB, Amine, Ann Arbor, 48103 (US)
(74) Representative: Rummler, Felix

(57) **Abstract**

Systems and methods are provided for a radar and cellular system for telematics and radar detecting in vehicles. In one example, the radar and cellular system includes a circuit board with layers including a top, a bottom, and a separating layer interposed between the top and the bottom, a radar array electrically coupled to the bottom and adapted to transmit and receive radar signals, a cellular array electrically coupled to the top and adapted to transmit and receive cellular signals, a single central processing unit adapted to control the radar signals and the cellular signals in order to perform functions such as occupant detection and diagnostics. The radar and cellular system further includes a single power source adapted to supply power for transmitting the radar signals and the cellular signals.

## Description

### TECHNICAL FIELD

The present description relates generally to radar and cellular systems.

### BACKGROUND AND SUMMARY

Radar detection systems may be used for detecting vehicle in-cabin living occupants and positions thereof within the vehicle. For example, radar sensors may detect when a child is left behind in a locked car and generate an alert. Further, occupant detection may be used to enhance in-cabin zone climate control, lighting, acoustics (e.g., in-car communication (ICC)), and the like. One or more radar sensors may be mounted in a roof of the vehicle, along with a first central processing unit (CPU). In parallel, a telematics control unit (TCU) may be used for vehicle connectivity. As such, the TCU may include cellular radio, global positioning system (GPS), other communication-based radios, and a second CPU. The TCU may also be coupled to an antenna, either within the TCU or external to the TCU. Having two separate CPUs and two separate power sources for the occupant detection sensors and the TCU may increase resource demand and complexity of the vehicle design. Further, more wiring and components may be installed in the roof, thus demanding more space for installation of the occupant detection system and TCU.

Thus, embodiments are disclosed herein that address at least some of the issues described above with a radar and cellular system, comprising a circuit board with layers including a top, a bottom, and a separating layer interposed between the top and the bottom. A radar array may be electrically coupled to the bottom and adapted to transmit and receive radar signals. A cellular array may be electrically coupled to the top and adapted to transmit and receive cellular signal. A single central processing unit (CPU) may be adapted to control the radar signals and the cellular signals, and a single power source (PS) may be adapted to supply power for transmitting the radar signals and the cellular signals. In this way, cellular communications and radar detection may be achieved with the radar and cellular system having the single CPU and the single power source, thereby reducing resource demand, complexity of installation, and weight. Further, combining telematics and radar sensing may allow for enhancement of diagnostics and additional functions not achievable by separate TCU and occupant sensor systems used in conjunction.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE FIGURES

The disclosure may be better understood from reading the following description of non-limiting embodiments, with reference to the attached drawings, wherein below:
FIG. 1 shows a schematic depicting an example inter-vehicle communications system in accordance with one or more embodiments of the present disclosure;
FIGS. 2A and 2B show a top view and an enlarged view of a vehicle with a radar and cellular system in accordance with one or more embodiments of the present disclosure;
FIG. 3 shows a schematic of a first example of a radar and cellular system in accordance with one or more embodiments of the present disclosure;
FIG. 4 shows a schematic of a second example of a radar and cellular system in accordance with one or more embodiments of the present disclosure;
FIG. 5 shows a schematic of a third example of a radar and cellular system in accordance with one or more embodiments of the present disclosure;
FIG. 6 shows a schematic of a fourth example of a radar and cellular system in accordance with one or more embodiments of the present disclosure;
FIG. 7 shows a schematic of a fifth example of a radar and cellular system in accordance with one or more embodiments of the present disclosure;
FIG. 8 shows a schematic of a sixth example of a radar and cellular system in accordance with one or more embodiments of the present disclosure;
FIG. 9 shows a first cross section view of a radar and cellular system in accordance with one or more embodiments of the present disclosure;
FIG. 10 shows second cross section view of a radar and cellular system in accordance with one or more embodiments of the present disclosure;
FIG. 11 shows a schematic of a filtering system in accordance with one or more embodiments of the present disclosure;
FIG. 12 shows a flowchart of a method for operating a radar and cellular system in accordance with one or more embodiments of the present disclosure;
FIG. 13 shows a flowchart of a method for prioritizing signals during operation of a radar and cellular system in accordance with one or more embodiments of the present disclosure;
FIG. 14 shows a flowchart of a method for performing diagnostics with a radar and cellular system in accordance with one or more embodiments of the present disclosure;
FIG. 15 shows a flowchart of a method for determining a degradation mode in which to operate a radar and cellular system in accordance with one or more embodiments of the present disclosure; and
FIG. 16 shows a timeline diagram for an example of timing and synchronizing cellular signals and radar signals.

### DETAILED DESCRIPTION

Embodiments of the present application are described in detail below, and examples of the embodiments are illustrated in the accompanying drawings, wherein the same or similar reference numerals indicate the same or similar components or components having the same or similar functions. The embodiments described below by reference to the accompanying drawings are exemplary and are intended only to explain the present application and are not to be construed as limiting the present application.

The following description relates to systems for a radar and cellular system comprising a single unit adapted to perform functions of a radar system (e.g., occupant detection system) and a cellular system (e.g., telematics system) with reduced components, complexity, and weight compared to including radar systems and cellular systems as separate systems.

A radar and cellular system in accordance with one or more embodiments of the present disclosure may share a single central processing unit (CPU) and a single power source (PS), thereby reducing resource demand, weight, and complexity. Further, combining radar sensors (e.g., for occupant detection) and cellular antenna (e.g., for telematics) into a single system may reduce wiring in a vehicle wherein the radar and cellular system is installed, further reducing resource demand, complexity, and weight. Further still, the radar and cellular functions may be such that performance is enhanced. For example, combining occupant sensing and telematics into a radar and cellular system in accordance with the present disclosure may increase diagnostic capabilities by analysis of crosstalk between radar and cellular signals. Further still, by sharing a single CPU and bypassing a controller of the vehicle, in at least some examples, the radar and cellular system may interact and coordinate to perform functions where radar and cellular signals are demanded, such as sending a communication to an external device upon detection of an occupant in the vehicle, for example as part of emergency services. Further still, by sharing a single PS and a single CPU, the radar and cellular signals may be synchronized and timed to reduce interference and maintain power draw below a threshold power, above which more than one PS or a greater power capacity PS may be demanded to support both radar and cellular communications. Thus, overall power usage may be reduced, compared to systems including separate telematics systems and occupant detection systems with separate CPUs and PSs.

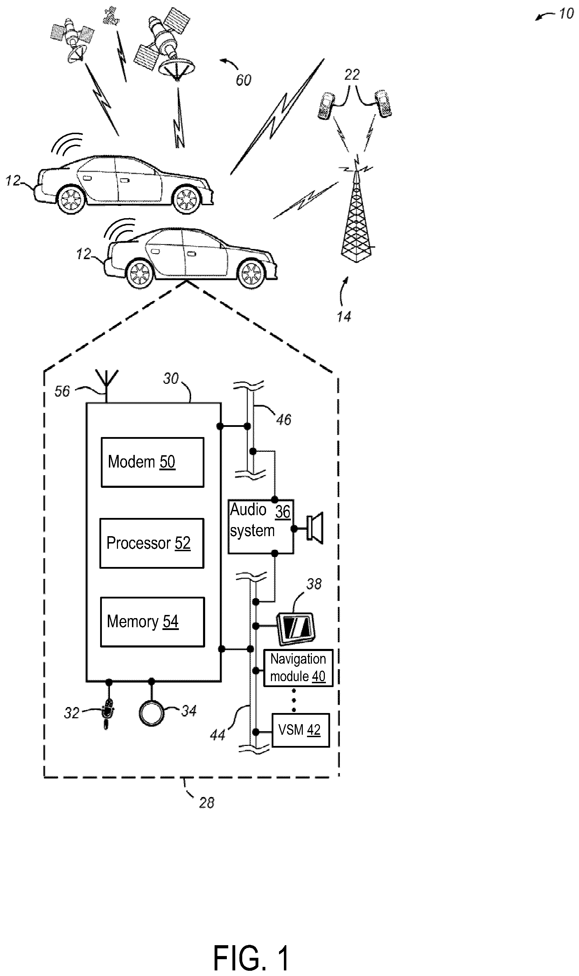

As described above, telematics systems are used to provide telecommunications and cellular connectivity for vehicles, and occupant detection systems are used to detect living occupants within the vehicles, for example using radar. The present disclosure describes a radar and cellular system which may be incorporated into a vehicle to establish communication between the vehicle and other vehicles in the same or similar geographic area or external services via a relay tower or base station, as well as implement radar sensing, for example detection of occupants within the vehicle. A communications system, such as the system depicted in FIG. 1, shows one such example of a system capable of providing communication between a vehicle and external services. The radar and cellular system may further be used for radar sensing, for example to identify living occupant locations in the vehicle. Detection of occupants may be used to alert a user of an occupant left behind and locked in the vehicle, and customize climate control, lighting, acoustics, and the like according to the locations of the occupants. Radar detection may provide further functions than not listed above.

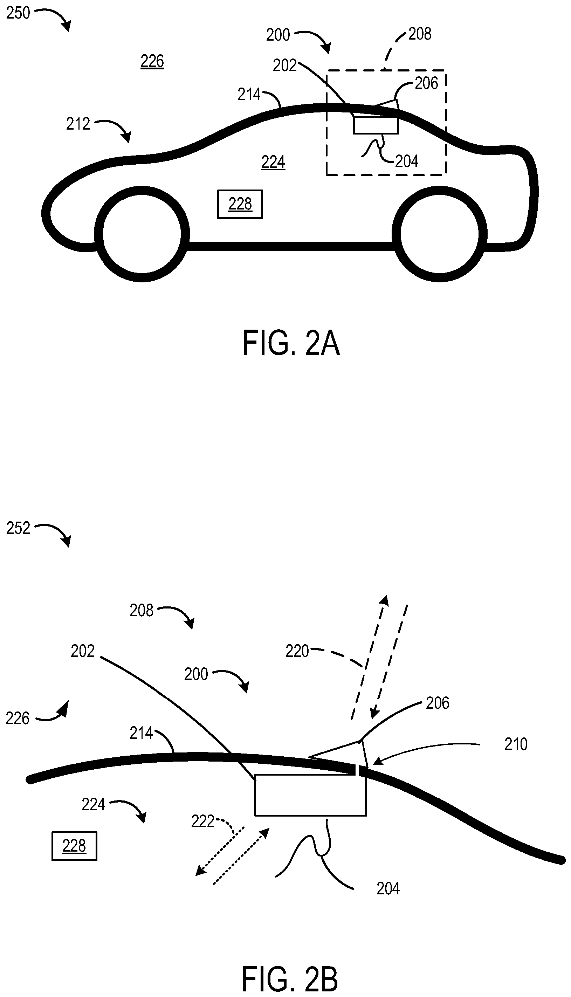

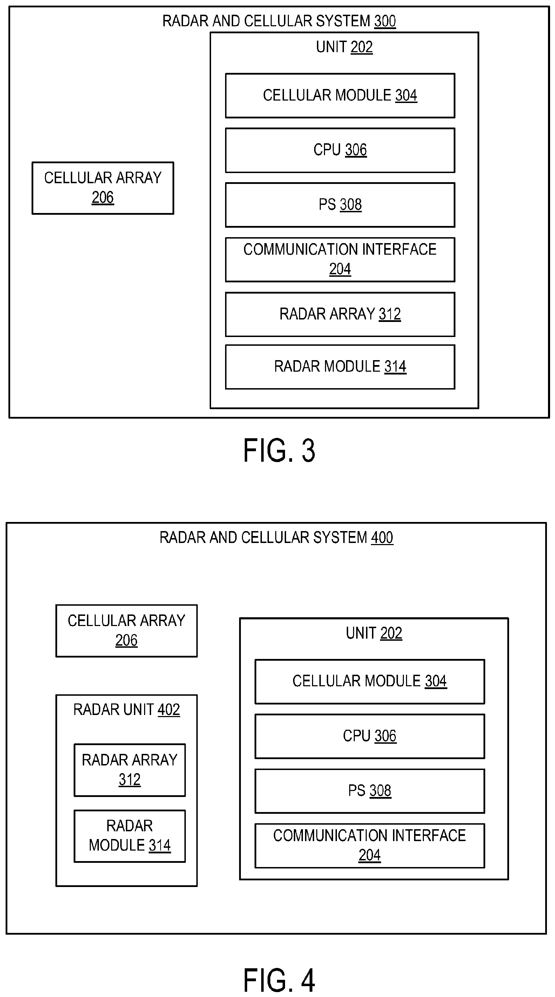

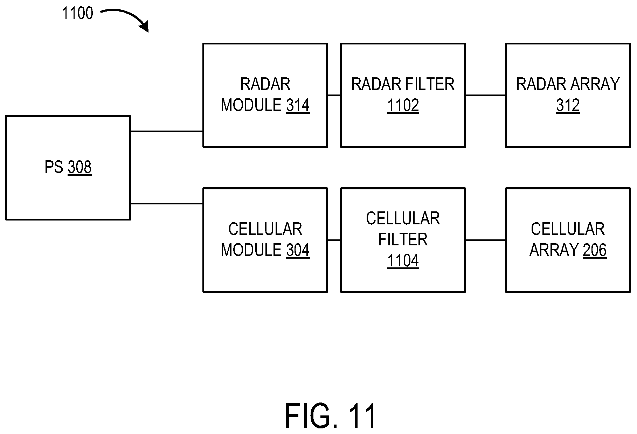

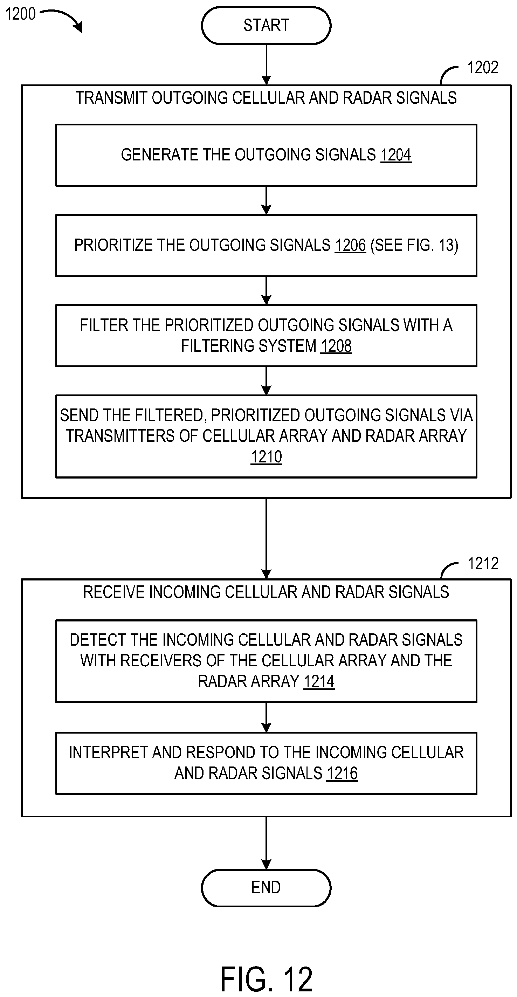

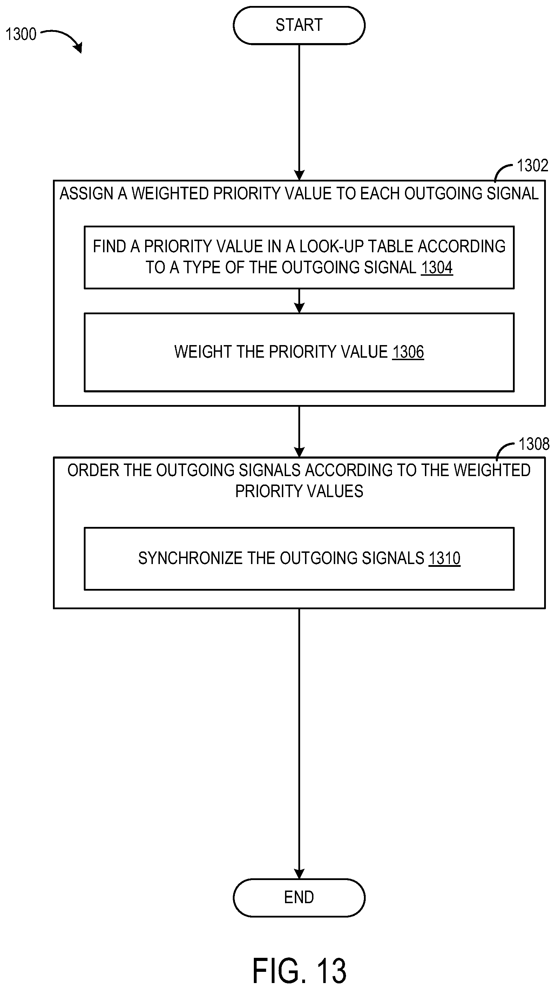

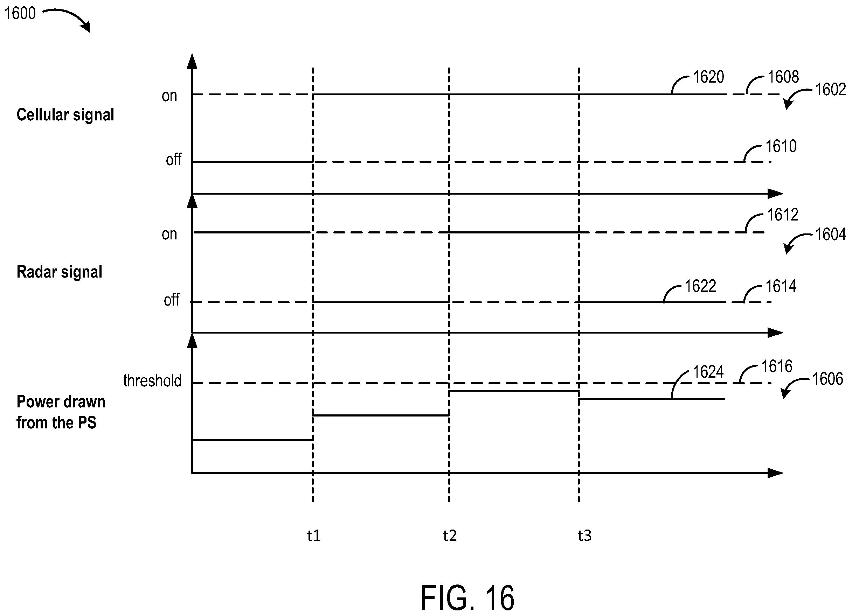

Previously, telematics systems and occupant detection systems have been implemented separately. In at least some prior art examples, the telematics systems and the occupant detection systems may be two separate units mounted in two different locations of a roof of a vehicle with two separate communication interfaces for connectivity with other vehicle systems. Further, in such examples, the telematics system and occupant detection system may each have its own central processing unit (CPU) and power source (PS). By instead mounting a radar and cellular system in a single position in the roof as shown in FIGS. 2A and 2B, a single CPU and a single PS may be included, thereby reducing resource demand, weight, and system complexity. A method for operating a radar and cellular system in accordance with one or more embodiments of the present disclosure is shown as a flowchart in FIG. 12. Examples of configurations of a radar and cellular system in accordance with one or more embodiments of the present disclosure are schematically depicted in FIGS. 3-10, including variations of locations of a cellular array, a radar array, and the single CPU. A filtering system, such as the system depicted in FIG. 11, may be incorporated to reduce noise and signal (e.g., cellular and radar signals) interference to a cellular module and a radar module. Further, the cellular and radar signals may be prioritized and timed (e.g., synchronized and staggered) such that power and bandwidth are conserved, as described with regards to FIG. 13. An example of timing of signals according to power demands is provided as a timeline diagram in FIG. 16.

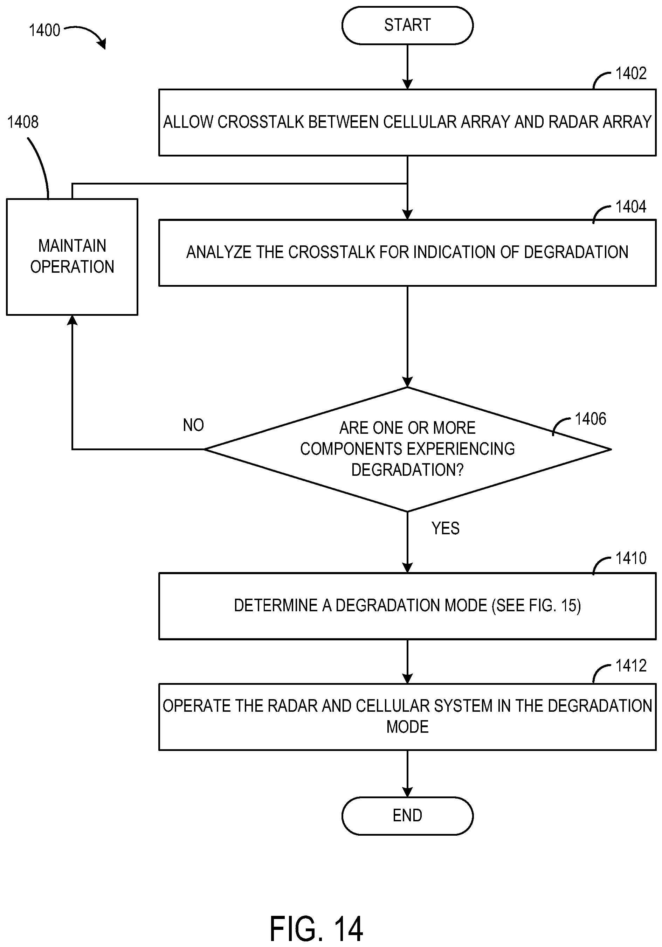

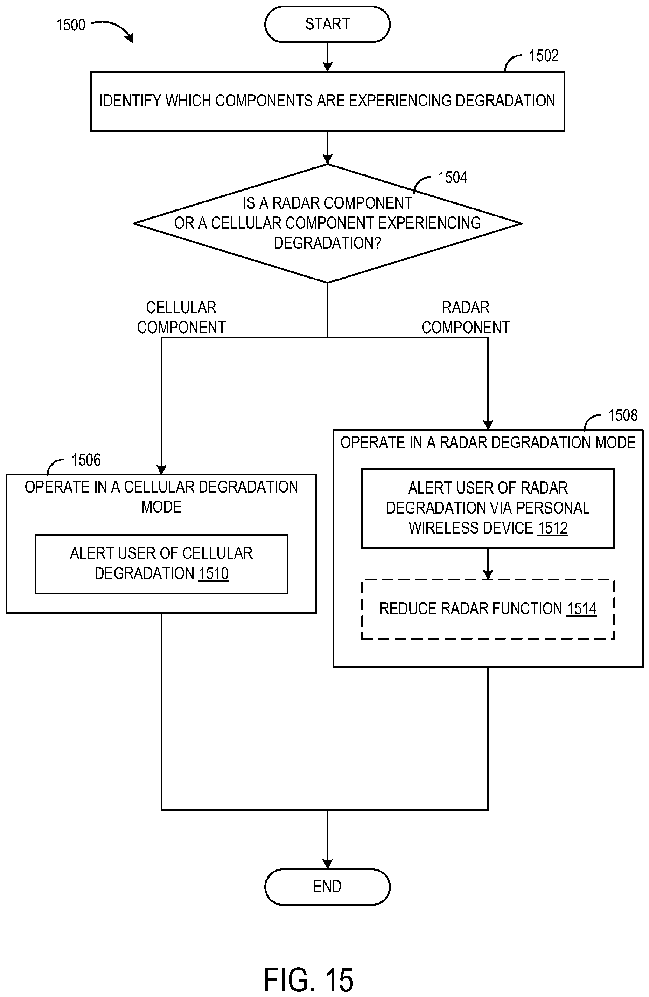

In addition to reducing components, combining the telematics and occupant detection into a single system in accordance with one or more embodiments of the present disclosure may allow for enhanced diagnostic capability as described in regards to FIG. 14 and operation in degradation modes as described in regards to FIG. 15. In this way, synergistic function of the radar and cellular system may be broader in applications than individual telematics and occupant detection systems used in conjunction.

With reference to FIG. 1, an exemplary operating environment is shown that comprises an inter-vehicle communications system 10 including one or more vehicles 12. In some examples, the inter-vehicle communications system 10 may additionally include various personal wireless devices 22, remote servers, wireless carrier systems 14, and the like. The following paragraphs simply provide a brief overview of one possible configuration for providing wireless communication between each of the vehicles 12, and between the vehicles 12 and external services. It should be appreciated that other systems not shown here may include the radar and cellular system disclosed herein.

Vehicles 12 are depicted in the illustrated embodiment as passenger cars, but it should be appreciated that any other vehicle including motorcycles, trucks, sports utility vehicles (SUVs), recreational vehicles (RVs), marine vessels, aircraft, etc., can also be used. Some of the vehicle electronics 28 are shown generally in FIG. 1. The vehicle electronics 28 may include one or more of a radar and cellular system 30, a microphone 32, one or more pushbuttons or other control inputs 34, an audio system 36, a visual display 38, and a navigation module 40 as well as a number of vehicle system modules (VSMs) 42.

radar and cellular system 30 may be an OEM-installed or aftermarket device that enables vehicles 12 to detect living occupants in the vehicles 12 and receive and/or transmit wireless signals corresponding to voice, text, and/or other data. Thus, radar and cellular system 30 may send and/or receive wireless signals (e.g., electromagnetic waves). Radar and cellular system 30 may therefore be referred to as transceiver 30, since it may be capable of both sending and receiving wireless signals. Wireless signals produced by the radar and cellular system 30 of vehicles 12 may be sent to and received by one or more of the vehicles 12 and external systems such as remote servers. Thus, each of the vehicles 12 may be in wireless communication with one another for sending and/or receiving information there-between via the radar and cellular system 30. Further, each of the vehicles 12 may be in wireless communication with external services and devices such as the personal wireless devices 22 and wireless carrier systems 14 for sending and/or receiving information therebetween. Additionally or alternatively, communications system 10 may utilize satellite communications to provide uni-directional or bi-directional communication between one or more of the vehicles 12 and external systems, such as remote servers, by using one or more communication satellites 60.

As such, each of the vehicles 12 may communicate with other telematics-equipped vehicles 12, or some other entity or device capable of transmitting and/or receiving wireless signals. Radar and cellular system 30 may enable the vehicles 12 to offer a number of different services including those related to messaging, navigation, telephony, emergency assistance, diagnostics, infotainment, climate control, lighting, and so on.

According to one embodiment, radar and cellular system 30 utilizes a wireless modem 50 for data transmission, an electronic processor 52, one or more digital memory devices 54, and one or more antennae 56. The radar and cellular system 30 may be connected to a peripheral network of the vehicle 12 via a communication interface, such as wiring. The antennae 56 of the radar and cellular system 30 may include a cellular array comprising one or more antennae and a radar array comprising one or more antennae adapted to send and receive wireless signals. For example, cellular array may include a receiving antenna and a transmitting antenna. Likewise, the radar array may include a receiving antenna and a transmitting antenna.

It should be appreciated that the modem 50 may be a separate hardware component located internal or external to radar and cellular system 30. Wireless networking between the vehicles 12 and other networked devices can also be carried out using radar and cellular system 30. For this purpose, radar and cellular system 30 can be configured to communicate wirelessly according to one or more wireless protocols.

Radar and cellular system 30 can be used to provide a diverse range of vehicle services that involve wireless communication to and from the vehicles 12. Such services can include: remote control of certain vehicle features; turn-by-turn directions and other navigation-related services provided in conjunction with the navigation module 40; airbag deployment notification and other emergency or roadside assistance-related services that are provided in connection with one or more collision sensor interface modules such as a body control module (not shown); diagnostic reporting using one or more diagnostic modules; and infotainment-related services where music, webpages, movies, television programs, videogames and/or other information is downloaded by an infotainment module (not shown) and stored for current or later playback. Further, radar and cellular system 30 may detect a presence and position of living occupants in the vehicles 12 and tailor vehicle services to the occupants. For example, sound from the audio system 36 may be adjusted according to the positions of the occupants. In another example, emergency-services may implement radar and cellular system 30 to identify an occupant left behind in a locked and powered-off vehicle and notify a user, for example via personal wireless devices 22. In this way, the radar and cellular system 30 may utilize radar and cellular signals for detection and communication, respectively, while other systems of the vehicle 12 are powered down. In the emergency-services example, identifying the occupant and sending the emergency notification in response may be performed by the radar and cellular system 30 independently of other vehicle systems. Thus, if a domain controller or another component of the vehicle network is powered off or degraded, radar detection and cellular communication may continue to function cooperatively due to combination of radar and cellular systems into the radar and cellular system 30.

The above-listed services are by no means an exhaustive list of all of the capabilities of radar and cellular system 30, but are simply an enumeration of some of the services that the exemplary radar and cellular system 30 is capable of offering. Furthermore, it should be understood that at least some of the aforementioned modules could be implemented in the form of software instructions saved internal or external to radar and cellular system 30, they could be hardware components located internal or external to radar and cellular system 30, or they could be combined and/or shared with each other or with other systems located throughout the vehicles 12, to cite but a few possibilities.

Turning to FIGS. 2A and 2B, a vehicle 212 is schematically shown in a side view 250 and an enlarged view 252 of a section 208 of the side view 250, with a radar and cellular system 200 installed in the roof 214. The radar and cellular system 200 may be an embodiment of the radar and cellular system 30 of FIG. 1. As such, the radar and cellular system 200 may be adapted to transmit and receive cellular signals 220 and radar signals 222. For example, as described with regards to FIG. 1, cellular signals 220 may be exchanged between the radar and cellular system 200 and external devices and systems, such as personal wireless devices, remote servers, wireless networks, and the like. Personal wireless devices such as the personal wireless devices 22 of FIG. 1 located inside an interior of the vehicle 212 may still be considered external devices because they are not directly coupled with (e.g., wired into) vehicle systems. Radar signals 222 may be emitted towards an interior 224 of the vehicle. In this way, radar signals 222 and cellular signals 220 may travel in roughly opposite directions. Thus, some interference between cellular and radar signals may be avoided due to non-overlapping pathways. However, in other examples, radar signals 222 may also be oriented towards an exterior 226 of the vehicle. Further, in some examples, cellular signals may also be oriented towards the interior 224.

In this way, the occupant detection and telematics (and other services) may share a single radar and cellular unit 202. The radar and cellular unit 202 may include a circuit board with a cellular module and a radar module in hardware format, as described further below. Further, the radar and cellular unit 202 may be coupled to other vehicle systems via a single communication interface 204. The single communication interface 204 may comprise wiring communicatively coupling the radar and cellular unit 202 with other vehicle systems through the vehicle peripheral network.

Components of the radar and cellular system 200 may be in direct communication. For example, the components of the radar and cellular system 200 may communicate without communicating via a domain controller 228 of the vehicle, in at least some examples. In this way, the radar and cellular system 200 may function regardless of a state of the domain controller 228.

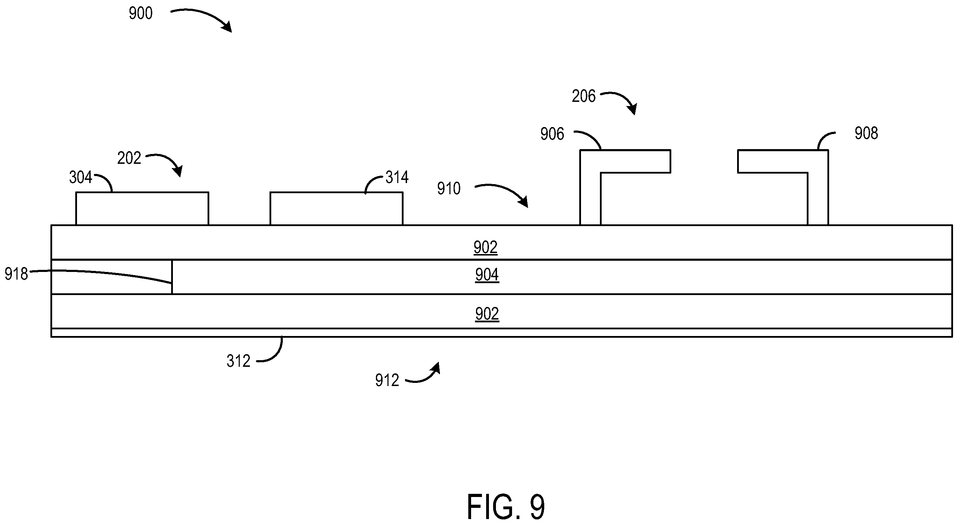

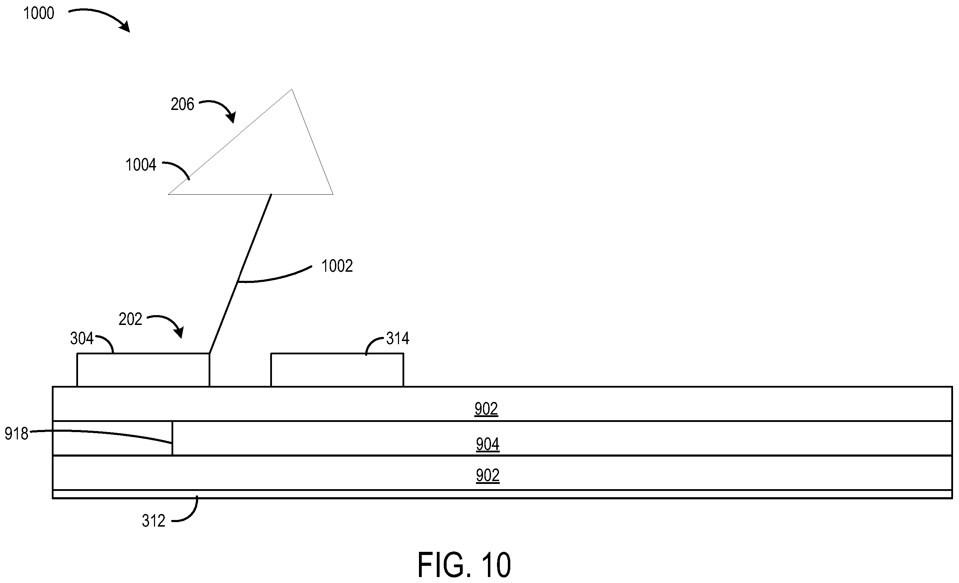

In some examples, antennae included in the system 200 may be spatially separated from the unit 202 and communicatively coupled, for example via wiring. For example, a cellular array 206 may be located external to the unit 202 as shown in FIG. 10, or included within the unit 202 as shown in FIG. 9. The cellular array 206 may be communicatively coupled to the unit 202 via wiring 210, in examples where the cellular array 206 is external to the unit 202. The cellular array 206 may be referred to as a satellite antenna in a configuration such as shown in FIGS. 2A, 2B, and 10 where the cellular array 206 is separate from the unit 202. Various configurations of components of the radar and cellular system 200 are possible. Several exemplary embodiments of the many embodiments are described in regards to FIGS. 3-10 below.

Turning to FIG. 3, a first example of a radar and cellular system 300 is schematically shown. The radar and cellular system 300 includes the unit 202 and the cellular array 206 external to the unit 202. The unit 202 includes a CPU 306, a PS 308, a communication interface 204, a radar array 312, a radar module 314, and a cellular module 304. Other components not schematically shown in FIGS. 3-10 may also be included in the unit 202 (e.g., housed within the unit 202), such as components or modules for WiFi, Bluetooth, standalone C-V2X, and the like.

The cellular module 304 may enable communications via cellular signals transmitted and received by the cellular array 206. Likewise, the radar module 314 may enable detection via radar signals transmitted and received by the radar array 312. The cellular module 304 and the radar module 314 may be implemented as hardware components mounted on a circuit board (e.g., circuit board 902 of FIG. 9). As described above, the radar array 312 and the cellular array 206 may each comprise one or more transmitting antennae and one or more receiving antenna. For example, the cellular array 206 may include a plurality of antennae used for different telematics systems, such as global navigation satellite system (GNSS), wireless local area networks (WLAN), and the like. The radar array 312 may include a transmitting antenna adapted to transmit radar signals, and a receiving antenna adapted to receive the radar signals after the radar signals are reflected off of an object, such as an occupant. The radar module 314 may compare aspects of the transmitted radar signals with the received radar signals, for example frequency and amplitude, to monitor the position, motion, and vital signs (e.g., breathing and heartbeat) of living occupants in the case of interior vehicle monitoring and occupant detection.

The CPU 306 may include processor 52 and memory 54 of FIG. 1. The CPU 306 may control both radar and cellular signals. In this way, the radar and cellular signals may be controlled in tandem and timed such that power from the PS 308 is reduced, and undesired interference between signals is reduced. Further, operations demanding both radar and cellular signals, such as alerting an external device via cellular signals in response to detecting an occupant in a vehicle via radar signals, may bypass a domain controller (e.g., central control system) of the vehicle and be completed entirely by the CPU 306. Such independence from the central control system of the vehicle may be advantageous in situations where the central control system is degraded. For example, following an accident where the central control system is degraded, the radar and cellular system 300 (or another embodiment of the radar and cellular system of the present disclosure) may detect occupants in the vehicle and send emergency alerts to inform emergency responders as to the occupants' locations in the vehicle. In other systems where telematics and occupant detection systems are separate and cannot bypass the central control system, such alerts may not be sent, or may require additional system interactions and additional power drain in order to function, such as from an on-board battery pack. Further still, desired crosstalk may be allowed between the radar signals and the cellular signals for diagnostics as described further with regards to FIG. 14 below.

Turning to FIG. 4, a second example of a radar and cellular system 400 is schematically shown. Similar to the first example of FIG. 3, the radar and cellular system 400 includes the cellular array 206 configured as a satellite array separate from the unit 202, and the unit 202 includes the cellular module 304, the CPU 306, the PS 308, and the communication interface 204.

The system 400 further includes a radar unit 402 including the radar array 312 and the radar module 314. However, the radar unit 402 may not include its own CPU, PS, or communication interface. For example, the radar unit 402 may comprise the radar array 312 and the radar module 314 mounted to a separate circuit board from the unit 202. In this way, the radar unit 402 and the cellular array 206 may share the same CPU 306 and the PS 308 with the same associated advantages described herein, but be spatially separated and thus allow for varying configurations when installed, for example in a roof of a vehicle according to geometry of the roof. Further, in some examples such as when implemented in larger vehicles, more than one radar unit 402 may be included and installed at different locations in the roof. The cellular array 206 may be configured as a satellite array separate from the unit 402.

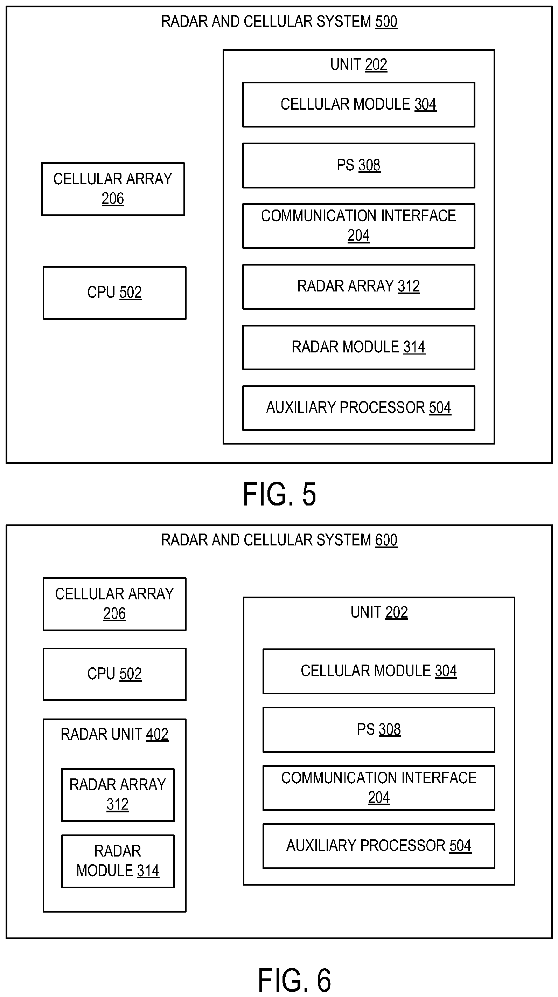

Turning to FIG. 5, a third example of a radar and cellular system 500 is schematically shown. Similar to the system 300 of FIG. 3, the system 500 includes the cellular array 206 configured as a satellite array and the radar array 312 and radar module 314 internal to the unit 202. However, the system 500 includes a CPU 502 separate from the unit 202. For example, the CPU 502 may be a domain controller of a vehicle (e.g., domain controller 228 of the vehicle 212 of FIGS. 2A and 2B) where the system 500 is installed. The system 500 also includes an auxiliary processor 504 for performing functions such as diagnostics where direct communication between radar signals and cellular signals is desired. In this way, the auxiliary processor 504 may be adapted to control transmission and reception of radar signals and cellular signals via the cellular array 206 and the radar array 312, respectively, without communication with the CPU 502 (e.g., domain controller). The CPU 502 may supplement the auxiliary processor 504 in performing functions where radar and cellular signals may not interact. For example, the CPU 502 may perform a function related to one of cellular signals or radar signals. Thus, the CPU 502 may process signals where crosstalk is not allowed between the radar and cellular signals. The unit 202 may include the auxiliary processor 504.

Turning to FIG. 6, a fourth example of a radar and cellular system 600 is schematically shown. Similar to the system 400 of FIG. 4, the system 600 includes the cellular array 206 as a satellite array and the radar unit 402 separate from the unit 202. However, like the system 500 of FIG. 5, the system 600 includes the CPU 502 separate from the unit 202. Thus, the system 600 may share the CPU 502 with other systems. The unit 202 may include the auxiliary processor 504, and the auxiliary processor 504 may not be shared with other systems.

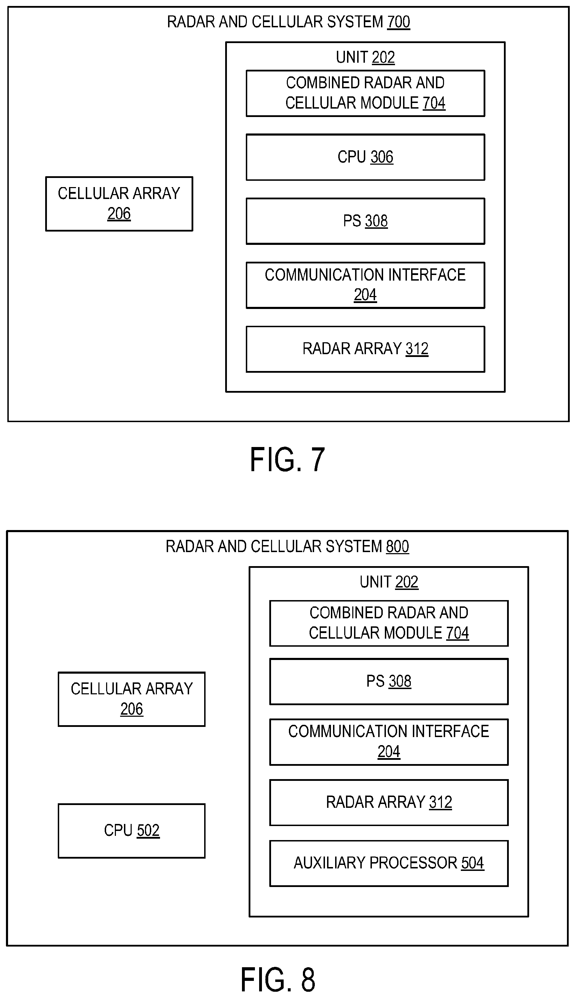

Turning to FIG. 7, a fifth example of a radar and cellular system 700 is schematically shown. The system 700 may include several components configured similarly to the system 300 of FIG. 3 but with a combined radar and cellular module 704 rather than two separate modules for cellular and radar functions. The combined radar and cellular module 704 may communicate with both the cellular array 206 and the radar array 312. The combined radar and cellular module 704 may consist of a single module, such as a chip. In this way, components and therefore resource demand may be further reduced, as well as a footprint (e.g., volume and installation area) of the unit 202.

Turning to FIG. 8, a sixth example of a radar and cellular system 800 is schematically shown. The system 800 also includes the combined radar and cellular module 704 704. Like the system 500 of FIG. 5 and the system 600 of FIG. 6, the system 800 includes the CPU 502 separate from the unit 202, where the CPU 502 may be a domain CPU of the vehicle where the system 800 is implemented.

Turning to FIG. 9, an example of a cross section of a radar and cellular system 900 with the cellular array 206 configured as a conformal antenna array is schematically shown. Some components of the radar and cellular system 900 are omitted from the cross section view for clarity, such as a CPU (e.g., CPU 306, CPU 502, or auxiliary processor 504) and a PS (e.g., PS 308).

A first antenna 906 and a second antenna 908 of the cellular array 206 may be mounted onto a top 910 of a circuit board 902. More specifically, the first antenna 906 and the second antenna 908 may protrude from the circuit board 902. The cellular array 206 may be electrically coupled to the top 910. In the example shown in FIG. 9, the cellular array 206 may be configured as a conformal antenna array, wherein the antennae of the cellular array 206 may be shaped and arranged according to a geometry of the vehicle roof (e.g., roof 214 of FIGS. 2A and 2B) such that the cellular array 206 does not protrude from the vehicle roof. For example, the first antenna 906 and the second antenna 908 may be configured to fulfill the diversity antenna function for cellular function. The cellular array 206 may include additional antennae in some examples, as described above with regards to FIGS. 2A and 2B. The radar array 312 may be positioned on a bottom 912 of the circuit board 902, wherein the bottom 912 faces opposite the top 910. The radar array 312 may be electrically coupled to the bottom 912. For example, the radar array 312 may be etched onto the circuit board 902. However, the radar array 312 may be configured as protruding from the circuit board 902 in other examples, similar to the cellular array 206 is shown. Further, in some examples, the radar array 312 and the cellular array 206 may be positioned on the same side, for example with antennae from both the cellular array 206 and the radar array 312 on the top 910 and/or both on the bottom 912.

When mounted in a roof of a vehicle such as the roof 214 of the vehicle 212 in FIGS. 2A and 2B, the top 910 may face outwards to an exterior of the vehicle (e.g., the exterior 226 of FIGS. 2A and 2B) and the bottom 912 may face inwards to an interior of the vehicle (e.g., the interior 224 of FIGS. 2A and 2B) of the vehicle. By configuring the cellular array 206 and the radar array 312 to be spatially separated on opposite sides of the circuit board 902, interference between wireless signals to and from the cellular array 206 and the radar array 312 may be reduced.

Further, a separating layer 904 may be interposed between layers of the circuit board 902, in at least some examples. The separating layer 904 may be a ground plane of the circuit board. Additionally or alternatively, the separating layer 904 may be constructed from a dielectric material. In this way, the dielectric material may further reduce undesired interference between the cellular array 206 and the radar array 312. In some examples, the separating layer 904 extends across an entire surface area of the circuit board 902 perpendicular to the cross section view shown. In other examples, the separating layer 904 extends partially across the area of the circuit board according to locations of antennae of the cellular array 206 and the radar array 312 such that a space is created between the layers of the circuit board 902. Further, in some examples, there may be one or more channels 918 extending through the separating layer 904 to allow selective crosstalk. For example, some crosstalk may be allowed between cellular signals and radar signals to expand diagnostic capability as described below with reference to FIG. 14. The one or more channels 918 may be created in specific locations, for example in close proximity to the cellular array 206 and the radar array 312. The one or more channels 918 may extend through an entirety of the separating layer 904.

The cellular module 304 and the radar module 314 may be mounted onto the circuit board 902 on the top 910 as shown, and/or the bottom 912 in other examples. The cellular module 304 may be communicatively coupled to the cellular array 206 and the radar module 314 may be communicatively coupled to the radar array 312, regardless of positioning of the aforementioned components relative to one another.

Turning to FIG. 10, a second example of a cross section of a radar and cellular system 1000 is shown schematically with the cellular array 206 configured externally as a satellite array.

The cellular array 206 may comprise one or more antennae in a protruding antenna unit 1004, wherein the protruding antenna unit 1004 protrudes outwards (e.g., upwards with reference to gravity) from a roof of a vehicle (e.g., roof 214 of the vehicle 212 in FIGS. 2A and 2B) where the system 1000 is installed. The cellular array 206 may be communicatively coupled to the cellular module 304 via a coupler 1002 (e.g., wiring). Spatial separation between the cellular array 206 positioned externally of the vehicle and the radar array 312 positioned internal to the vehicle (e.g., embedded in the roof) may reduce undesired interference between radar signals (e.g., radar signals 222 of FIG. 2B) and cellular signals (e.g., cellular signals 220 of FIG. 2B). As described with reference to FIG. 13, the separating layer 904 may further reduce undesired noise and interference between cellular signals to and from the cellular array 206 and radar signals to and from the radar array 312.

The example configurations provided in FIGS. 3-10 are exemplary and other configurations are possible. For example, as described above, the cellular array 206 may alternatively be included in the unit 202 (e.g., as a conformal antenna array) in any of the examples depicted in FIGS. 3-8. Further, combinations of aspects of the different configurations are also possible without departing from the scope of the present disclosure. For example, as described above in regards to FIGS. 7 and 8, the cellular module 304 and the radar module 314 may instead be consolidated into a single module such as the combined radar and cellular module 704 in any of the example configurations such as in FIGS. 3-6 and 9-10 where the cellular module 304 and the radar module 314 are included. As such, the cross sections shown in FIGS. 9 and 10 may include a cellular and radar module mounted to the circuit board 902 rather than a radar module and a separate cellular module, in some examples.

Turning to FIG. 11, a filtering system 1100 is schematically depicted. The filtering system 1100 may be implemented in any radar and cellular system in accordance with one or more embodiments of the present disclosure, such as one of the examples provided in FIGS. 3-10 or variations thereof.

A radar filter 1102 may be applied between the radar module 314 and the radar array 312, wherein the radar filter may be a low-pass, high-pass, or band-pass filter, for example depending on operational bands of the cellular array 206 and the radar array 312. Likewise, a cellular filter 1104 may be applied between the cellular module 304 and the cellular array 206, wherein the cellular filter 1104 may be a low-pass, high-pass, or band-pass filter, for example depending on operational bands of the cellular array 206 and the radar array 312. Specifically, the cellular filter 1104 and the radar filter 1102 may be low-pass, high-pass, or band-pass filters according to frequency bands of the opposite signal type (e.g., cellular or radar) powered or energized by the same PS 308. For example, the cellular filter 1104 may filter frequencies according to radar signal frequency bands, and the radar filter 1102 may filter frequencies according to cellular signal frequency bands. Frequencies filtered out by the radar filter 1102 and the cellular filter 1104 may also depend on the specific signals being sent to the radar array 312 and the cellular array 206.

In this way, the radar filter 1102 and the cellular filter 1104 may reduce (e.g., prevent) undesired interference between the radar and cellular signals. Thus, signal interference may be reduced by spatial separation and filtering signals. Further, signal interference may be reduced by signal synchronization and waveform design, in some examples. However, some crosstalk between sensors may be desirable. For example, adjusting filters 1102 and 1104 to allow some signals from the opposite array may increase diagnostic information as described with regards to the method of performing diagnostics shown as a flowchart in FIG. 14. For example, some cellular signals may be allowed to reach the radar array and some radar signals may be allowed to reach the cellular array.

Turning to FIG. 12, a flowchart of a method 1200 is shown for operating a radar and cellular system, such as one of the examples schematically depicted in FIGS. 3-10. The method 1200 may be stored as instructions in non-volatile memory of a controller, such as an internal CPU (e.g., CPU 306 of FIGS. 3, 4, and 7) or a domain controller (e.g., the CPU 502 of FIGS. 5, 6, and 8). The method 1200 may be executed continuously as the radar and cellular system is in operation, in at least some examples.

The method 1200 begins at 1202, wherein outgoing signals, including outgoing cellular signals and outgoing radar signals, are transmitted. 1202 is a sub-method of method 1200 that includes a plurality of sub-steps. 1202 includes 1204, wherein the outgoing signals are generated. The outgoing signals may be generated regularly or in response to an event, depending on a type of the signal. For example, outgoing radar signals (e.g., radar signals 222 of FIG. 2B) may be generated on an interval to continuously scan the inside of the vehicle for occupants. In another example, outgoing cellular signals (e.g., cellular signals 220 of FIG. 2B) may be generated in response to receiving communication from an external entity such as another vehicle or user input to send messages to an external device such as personal wireless devices 22 of FIG. 1.

The method 1200 proceeds to 1206, wherein the outgoing signals are prioritized. For example, method 1300 of FIG. 13 may be implemented. 1202 also includes 1206. As such, 1206 may include assigning a priority value to each outgoing signal, wherein assigning a priority value to the outgoing signals comprises finding a priority value in a look-up table according to a type of the outgoing signal and weighting the priority value according to a frequency of the outgoing signal type and power demands. The signals may then be ordered according to the weighted priority values. In this way, the controller executing the method 1200 may identify urgent signals, such as emergency-related service signals, and prioritize the urgent signals over other signals, such as frequently occurring signals. Further aspects of signal prioritization and timing are described with regards to FIG. 13 below.

The method 1200 proceeds to 1208, wherein the prioritized outgoing signals are filtered by a filtering system. 1202 includes 1208. For example, the filtering system 1100 of FIG. 11 may be implemented. As such, a cellular filter and a radar filter may be applied to cellular and radar signals, respectively, wherein the cellular filter and the radar filter may be low-pass, high-pass, or band-pass filters. For example, the cellular filter may filter out at least some radar signal frequencies and the radar filter may filter out at least some cellular signal frequencies. In this way, the controller executing the method 1200 may reduce (e.g., prevent) undesired interference between the outgoing signals by decreasing noise from other signals before being transmitted. In some examples, some crosstalk (e.g., desired interference) may be allowed, for example for use in diagnostics as described further below in regards to FIG. 14.

The method proceeds to 1210, wherein the filtered, prioritized outgoing signals are sent via transmitters of the cellular array and the radar array. 1202 includes 1210. For example, filtered, prioritized outgoing signals may be sent in order of prioritization, such that high priority signals are transmitted before low priority signals. Further, timing of transmissions may be adjusted by staggering or delaying signals according to priority. For example, signals may be offset by a time delay such that cellular and radar signals are not transmitted at the same time. In this way, bandwidth and power may be conserved.

The method 1200 proceeds to 1212 from 1202, wherein incoming signals, including incoming cellular signals and incoming radar signals, are received. 1212 is a sub-method of method 1200 that includes a plurality of sub-steps. 1212 includes 1214, wherein the incoming signals are detected by receivers of the cellular array and the radar array. For example, the radar array receiver may detect an incoming signal that was reflected off of an occupant in the vehicle. The cellular array receiver may detect an incoming signal sent from an external device.

The method 1200 proceeds to 1216, wherein the incoming signals are interpreted and responded to. 1212 includes 1216. For example, interpreting and responding to an incoming radar signal reflected off of an occupant in the vehicle may be include determining the position of the occupant has changed, and adjusting vehicle systems (e.g., audio, lighting, etc.) accordingly. In another example, an incoming cellular signal received from an external device may be used in messaging or other communication, and user input may be prompted accordingly. Further, cellular signals and radar signals may interact. For example, interpreting and responding to the incoming signals may include performing diagnostics, such as by implementing the method 1400 of FIG. 14, and operating the radar and cellular system in a degradation mode according to a resulting diagnosis, such as by implementing the method 1500 of FIG. 15. For another example, radar signals indicating an occupant being left behind in a locked and powered-off vehicle may result in sending an emergency notification via cellular signal. Due to sharing a single CPU, the emergency notification may be processed and transmitted more promptly than in a system wherein telematics and occupant detection are separate systems with separate CPUs. Further, because the single CPU is adapted to control transmission and reception of the radar signals and the cellular signals without communication with a domain controller of the vehicle, the emergency notification may be processed and transmitted regardless of whether the domain controller experiences degradation. In another example, in the event of a vehicle collision, radar occupant detection may identify locations and vital signs (e.g., breathing and heartrate) of occupants in the vehicle and transmit emergency cellular notification to improve notifications to external services. In this way, in a radar and cellular system in accordance with the present disclosure, telematics and occupant detection functions may work synergistically, for example to provide emergency services even if a central controller of the vehicle is degraded, for example by the collision.

The method 1200 may be repeated continuously during operation of the radar and cellular system. Steps of the method 1200 may be completed in different orders than described. Further, additional steps to those provided in FIG. 12 may be included in operation of a radar and cellular system in accordance with one or more embodiments of the present disclosure.

Turning to FIG. 13, a flowchart of a method 1300 is shown for prioritizing signals to and from the cellular array and the radar array of a radar and cellular system such as the examples of FIGS. 3-10. The method 1300 may be stored as instructions in non-volatile memory of a controller, such as an internal CPU (e.g., CPU 306 of FIGS. 3, 4, and 7), an auxiliary processor (e.g., auxiliary processor 504 of FIGS. 5, 6, and 8) if the auxiliary processor is equipped with non-volatile memory, or a domain controller (e.g., the CPU 502 of FIGS. 5, 6, and 8) if the auxiliary processor is not equipped with non-volatile memory.

The method 1300 begins at 1302, wherein a weighted priority value is assigned to each outgoing signal. 1302 includes 1304, wherein a priority value is found in a look-up table according to a type of the outgoing signal. For example, a relatively higher priority value may be assigned to an emergency signal (e.g., outgoing signal generated in response to an emergency such as a vehicle collision) than an outgoing radar signal which may occur on regular intervals. In another example, signals related to operation in an autonomous-vehicle mode may be relatively high priority. In another example, cellular signals may be partially or fully shutdown (e.g., blocked, delayed, etc.), for example by assigning very low priority, in response to a cyber-attack via cellular communication.

The method 1300 proceeds to 1306, wherein each priority value is weighted. Priority values may be weighted based on frequency of the outgoing signal, occurrence of the outgoing signal, and other factors. For example, if a radar signal is transmitted on a short interval, for example every second, the radar signal may be weighted lower than an irregularly occurring signal, for example a cellular signal that is transmitted in response to an event. In another example, priority may be weighted higher for a signal within in a range or band of frequencies.

The method 1300 proceeds to 1308, wherein the outgoing signals are organized according to the weighted priority value. An order of signals may be determined at 1308. For example, the higher weighted priority value signals may be transmitted before lower weighted priority value signals.

1308 includes 1310, wherein the outgoing signals are synchronized. Synchronization may include determining timing of signals in the order according to priority. For example, signals may be delayed, staggered, and the like to prevent undesired interference of signals and reduce power demands. Synchronization may include applying waveform design to ensure the organized, prioritized outgoing signals do not interfere in an undesired manner. Synchronization may include determining timing of signal transmission such that cellular and radar signals are not sent in parallel. Synchronization may further include timing signals such that power drawn from a PS, such as the PS 308 of FIGS. 3-10, remains below a threshold power as described below with regards to FIG. 16. Further, timing of signals may be designed to allow some interference (e.g., crosstalk) when desired. For example, desired interference may include the cellular array receiving radar signals and/or the radar array receiving cellular signals. In this way, cellular components and radar components may be used to diagnose each other, according to the desired interference compared with expected interference.

In this way, signals may be ordered and timed to reduce undesired signal interference, allow desired signal interference, and reduce power demands. Thus, a lower capacity power supply may be included in a radar and cellular system in accordance with the present disclosure by implementing the method 1300, thereby further decreasing resource demand. The method 1300 is an example of prioritizing signals of a radar and cellular system according to the present disclosure. However, variations of the method 1300 including emitting steps, including additional steps, or rearranging an order of the steps are also within the scope of the present disclosure.

As one example of prioritizing outgoing signals, such as by implementing the method 1300, the outgoing signals generated may include a first signal, a second signal, and a third signal. Specifically, the first signal may be an emergency-related cellular signal such as a signal generated in response to a collision or user input signifying distress. The second signal may be a messaging-related cellular signal for sending a text message to an external personal wireless device in response to user input. The third signal may be a regular radar pulse automatically transmitted inwards to the interior of vehicle on a first interval to detect occupants. A first priority value may be assigned to the emergency-related signal, a second priority value may be assigned to the messaging-related signal, and a third priority value may be assigned to the radar signal. In at least some examples, outgoing signals transmitted in response to an emergency may be given the highest priority. Thus, the first priority value may be the highest due to the emergency-related nature of the signal. The second signal may be prioritized as the second highest, due to the third signal occurring regularly on the first interval, in contrast with the second signal occurring in response to user input. Thus, the third signal may be prioritized lowest and may be transmitted last. However, in some examples, the second and the third signals may be transmitted concurrently, depending on frequencies and power demands of the signals. For example, if a capacity of the PS (e.g., PS 308 of FIGS. 3-10) is greater than power demanded to send both the second and third signal, and frequencies of the second and third signals are compatible (e.g., do not interfere undesirably), the second and third signals may be transmitted concurrently such that the second signal and the third signal at least partially overlap. However, for example, if the frequencies of the second and third signals would interfere undesirably, the third signal may be delayed such that the second signal is transmitted prior to the third signal according to the associated priority values. Timing of signals is described further in regards to FIG. 16 below.

In the same example, the outgoing signals may further include a fourth signal and a fifth signal for diagnostic analysis of the radar and cellular system. For example, the fourth signal may be a cellular signal transmitted on a second interval and the fifth signal may be a radar signal transmitted on the second interval. The fourth signal and the fifth signal may be designed to be transmitted concurrently on the same interval to allow desired interference to be analyzed by diagnostic methods, such as the method 1400 of FIG. 14. If the second interval is longer than the first interval, the fourth and fifth signals may be transmitted concurrently after the second signal and prior to the third signal. In other words, the signals occurring less often may be prioritized over more frequently occurring signals. The example described above for prioritizing signals is exemplary and non-limiting as to prioritization of the types of signals described or other signals. For example, in other instances, the radar signal may be prioritized highest to update a number and location of occupants before sending the emergency-related signal in order to include occupant information in the emergency notification. Further, diagnostic-related signals, such as the fourth and fifth signals, may in some examples be prioritized higher than the second signal related to messaging. Further description as to using radar and cellular signals, such as the fourth and fifth signals in the example described above, for diagnostics of the radar and cellular system of the present disclosure is provided below in regards to FIG. 14.

A flowchart of a method 1400 is shown in FIG. 14 for using a radar and cellular system for diagnostics of components thereof. The method 1400 may be stored as instructions in non-volatile memory of a controller, such as an internal CPU (e.g., CPU 306 of FIGS. 3, 4, and 7), an auxiliary processor (e.g., auxiliary processor 504 of FIGS. 5, 6, and 8) if the auxiliary processor is equipped with non-volatile memory, or a domain controller (e.g., the CPU 502 of FIGS. 5, 6, and 8) if the auxiliary processor is not equipped with non-volatile memory.

The method 1400 begins at 1402, wherein crosstalk (e.g., desired interference) is allowed between the cellular array and the radar array. Allowing crosstalk may include creating channels through a separating layer such as the separating layer 904 prior to installation of the radar and cellular system as described with reference to FIGS. 9 and 10. In other examples, the cellular array and the radar array may be selectively coupled, such that allowance of crosstalk may be enabled and disabled by the controller. For example, selective coupling may be achieved by a coupling switch or through software control. In this way, crosstalk may be allowed periodically for scheduled diagnostics or in response to an event such as start-up of the vehicle, and crosstalk may be prevented when diagnostics are not demanded. Additionally or alternatively, radar and cellular signal frequencies may be within frequency ranges conducive to crosstalk. Further, by organizing and timing signals in a way where some signals overlap, for example by implementing the method 1300 of FIG. 13, crosstalk may be allowed when desired.

The method 1400 proceeds to 1404, wherein the crosstalk is analyzed for indication of degradation. For example, the cellular array may receive interference from radar signals, and the radar array may experience interference from cellular signals. For example, certain interference patterns may indicate a specific component is experiencing degradation and not functioning as expected. In another example, the cellular array experiencing a lack of interference from radar signals may indicate the radar module or radar array is experiencing degradation and not functioning as expected. Likewise, an absence of interference experienced by the radar array may indicate the cellular array or the cellular module is experiencing degradation and not functioning as expected. In this way, the cellular array and the radar array may work synergistically to increase diagnostic capability (e.g., reduce response time, increase diagnosis accuracy, etc.) of the radar and cellular system, compared to separate telematics and occupant detection systems.

The method 1400 proceeds to 1406, wherein it is determined whether one or more components are experiencing degradation. One or more indications of degradation found at 1404 may result in a conclusion that one or more components are experiencing degradation. If no indications of degradation are found, it may be decided that no components are experiencing degradation. In some examples, an indication (e.g., interference pattern or absence of interference) may persist for a pre-determined length of time before it is concluded that a component is experiencing degradation, to reduce misdiagnosis occurrence.

If no components are experiencing degradation (NO at 1406), the method 1400 proceeds to 1408, wherein operation is maintained. No changes may be made to operational conditions.

Alternatively, if one or more components are experiencing degradation (YES at 1406), the method proceeds to 1410, wherein a degradation mode is determined. For example, method 1500 of FIG. 15 may be implemented.

The method 1400 proceeds to 1412, wherein the radar and cellular system is operated in the degradation mode determined at 1410. In this way, operation of the radar and cellular system may be adjusted according to current states of the system components such that operation may continue in the event of one or more components not functioning as expected due to degradation. Thus, combination of cellular and radar systems into a single radar and cellular system may allow for compensation of a component experiencing degradation, and in some examples, continue to function as expected, for example until maintenance may be performed.

Turning to FIG. 15, a flowchart of a method 1500 is shown for determining a degradation mode in which to operate a radar and cellular system in accordance with a current state of the radar and cellular system and/or a vehicle (e.g., the vehicle 212 of FIGS. 2A and 2B) wherein the radar and cellular system is installed. The method 1500 may be stored as instructions in non-volatile memory of a controller, such as an internal CPU (e.g., CPU 306 of FIGS. 3, 4, and 7), an auxiliary processor (e.g., auxiliary processor 504 of FIGS. 5, 6, and 8) if the auxiliary processor is equipped with non-volatile memory, or a domain controller (e.g., the CPU 502 of FIGS. 5, 6, and 8) if the auxiliary processor is not equipped with non-volatile memory.

The method 1500 begins at 1502, wherein components experiencing degradation are identified by performing diagnostics. For example, the method 1400 of FIG. 14 for diagnostic testing of the radar and cellular system may be implemented.

The method 1500 proceeds to 1504, wherein it is determined whether a cellular component or radar component is experiencing degradation according to the identification at 1502. A cellular component includes a cellular array and a cellular module (e.g., cellular array 206 and cellular module 304 of FIGS. 3-10). A radar component includes a radar array and a radar module (e.g., radar array 312 and radar module 314 of FIGS. 3-10).

If the cellular component is experiencing degradation (CELLULAR COMPONENT at 1504), the method proceeds to 1506, wherein operation in a cellular degradation mode occurs.

1506 includes 1510, wherein a user is alerted of cellular degradation. For example, the user may be an operator of the vehicle. Alerts may be presented to the user via a user interface such as a screen. For example, alerts may be presented via the visual display 38 of FIG. 1. The alert may be generated by a CPU (e.g., CPU 306 of FIGS. 3-10) of the radar and cellular system.

Alternatively, if the radar component is experiencing degradation (RADAR COMPONENT at 1504), the method proceeds to 1508, wherein operation in a radar degradation mode occurs. By operating in the radar degradation mode, the radar and cellular system may continue to perform functions of occupant sensing and telematics while the radar array is experiencing degradation.

1508 includes 1512, wherein a user is alerted of radar degradation via personal wireless device. For example, the cellular array may transmit signals to a personal wireless device (e.g., personal wireless device 22 of FIG. 1) belonging to the user or otherwise in the vehicle such that an alert is presented to the user. The user may be aware of degradation and maintenance demands to repair degradation more promptly than by implementing diagnostics using separate telematics and occupant detection systems which communicate only via other systems of the vehicle. Alternatively, the user may be alerted via a user interface of the vehicle as described with regards to 1510.

1508 may include 1514, wherein radar function is optionally reduced. For example, radar signals may continue to detect occupants in the vehicle when present but may not provide more details as to a number of occupants, positions of the occupants, vital signs of the occupants, etc. In this way, some radar function may be maintained when operating in the radar degradation mode. Presence of occupants may be useful in emergency applications, for example, for detecting presence of at least one occupant left being in a locked and powered-off vehicle and sending a cellular signal alert of the presence of one or more occupants.

The method 1500 is exemplary and non-limiting as to degradation modes of a radar and cellular system. For example, additional degradation modes may be included. Further, additional steps may be included in one or more of the degradation modes.

Turning to FIG. 16, a timeline diagram 1600 is shown to exemplify timing and synchronization of cellular and radar signals from a radar and cellular system in accordance with one or more embodiments of the present disclosure. The radar and cellular system may include a cellular array and a radar array powered by a single PS. As such, radar signals and cellular signals may be timed, prioritized, and synchronized to ensure power drawn from the PS is maintained at or below a threshold power. For example, the method 1300 of FIG. 13 may be implemented. The threshold power may be a non-zero power capacity of the PS. The power capacity may depend on the type of PS and a configuration of the radar and cellular system. In this way, power may be conserved by combining cellular and radar systems into a radar and cellular system of the present disclosure.

A first plot 1602 shows a first trace 1620 for cellular signals, where the cellular signals can be on as indicated by line 1608 or off as indicated by line 1610. Likewise, a second plot 1604 shows a second trace 1622 for radar signals, where the radar signals can be on as indicated by line 1612 or off as indicated by line 1614. A third plot 1606 shows a third trace 1624 for power draw from the PS, where the power is maintained at or below the threshold as indicated by line 1616.

Before t1, cellular signals are off and radar signals are on. The power is below the threshold. For example, the radar signals may have been prioritized higher than subsequent signals, and thus turned on first. Further, power or frequency of the radar signals may not be compatible with subsequent signals. For example, frequency of the radar signals before t1 and other signals after t1 may cause undesirable interference if transmitted in parallel. Therefore, the radar signals before t1 may be staggered with the other signals as shown. Additionally or alternatively, power demands of the radar signals before t1 and the other signals may exceed the threshold if transmitted together. Thus, the radar signals before t1 may not overlap the other signals, for example due to frequency incompatibility, power demands, and/or other factors.

At t1, cellular signals are turned on and radar signals are turned off. For example, a priority of the cellular signals between t1 and t2 may be lower than the radar signals before t1 and higher than signals after t2. The cellular signals may be offset from the radar signals before t1 by a time delay such that the cellular signals between t1 and t2 do not overlap (e.g., occur concurrently with) the radar signals before t1 in order to reduce undesired interference and maintain power below the threshold.

At t2, cellular signals remain on and radar signals are turned on. In this way, the cellular signals and the radar signals may be transmitted concurrently with power below the threshold power. For example, the power drawn from the PS may be higher between t2 and t3 due to cellular signals and radar signals both being on compared to before t1 and between t1 and t2 where only one of cellular signals or radar signals is on. The power levels shown in the third plot 1606 are shown as examples for relative changes (e.g., higher or lower) from other time intervals and do not limit values or relative changes in practice. The cellular signals and the radar signals may be both on to allow desired interference, or crosstalk, for use in performing diagnostics, such as by implementing the method 1400 of FIG. 14. Alternatively, the cellular signals and the radar signals between t2 and t3 may have compatible frequencies which do not result in undesired interference when transmitted concurrently. Further, the cellular signals and the radar signals between t2 and t3 may together have lower power demand than the threshold power. Thus, in some examples, cellular signals and radar signals may be allowed to overlap, depending on power, frequencies, phase, waveform, and/or other factors.

At t3, cellular signals remain on and radar signals are turned off. The power is maintained below the threshold, but is higher than at times before t2. Thus, radar signals may have been turned off due to an increase in cellular signal power demands at t3 and the cellular signals between t2 and t3 having a higher priority than the radar signals between t2 and t3.

The timeline diagram 1600 is exemplary and non-limiting as to operation of a radar and cellular system of the present disclosure. For example, patterns of cellular signals and radar signals being on and off may be different than shown. Further, relative power demanded by different signals may be different than shown. For example, radar signals may demand higher power than cellular signals in other examples. Further, the times t1, t2, and t3 may not be equidistant and any time intervals may occur between changes in cellular and radar signals.

The technical effect of the radar and cellular system disclosed herein is to reduce resource demand by including a single CPU and a single PS for transmitting and receiving both cellular and radar signals, for example for telematics and radar detection (e.g., of vehicle occupants). Moreover, due to the cooperation of cellular and radar systems, methods of diagnostics may be more effective (e.g., accurate as to identification of a diagnosis) and prompt (e.g., with reduced time to diagnose). Further, including a single CPU allows for reduction of power use maintained under a threshold power by prioritizing and timing cellular and radar signals. Further still, in at least some degradation modes, the radar and cellular system may continue to function as expected by compensating for a degraded component.

The disclosure also provides support for a radar and cellular system, comprising: a circuit board with layers including a top, a bottom, and a separating layer interposed between the top and the bottom, a radar array electrically coupled to the bottom and adapted to transmit and receive radar signals, a cellular array electrically coupled to the top and adapted to transmit and receive cellular signals, a single central processing unit (CPU) adapted to control the radar signals and the cellular signals, and a single power source (PS) adapted to supply power for transmitting the radar signals and the cellular signals. In a first example of the system, the separating layer comprises a dielectric material to reduce undesired interference between the radar signals and the cellular signals. In a second example of the system, optionally including the first example, one or more channels extend through the separating layer to allow crosstalk between the radar signals and the cellular signals. In a third example of the system, optionally including one or both of the first and second examples, the system further comprises: a radar module communicatively coupled to the radar array and a cellular module communicatively coupled to the cellular array. In a fourth example of the system, optionally including one or both of the first and second examples, the system further comprises: a combined radar and cellular module communicatively coupled to both the cellular array and the radar array. In a fifth example of the system, optionally including one or more or each of the first through fourth examples, the cellular array is configured as a satellite array protruding from a roof of a vehicle where the radar and cellular system is installed. In a sixth example of the system, optionally including one or more or each of the first through fourth examples, the cellular array is configured as a conformal antenna array shaped and arranged according to a geometry of a roof of a vehicle where the radar and cellular system is installed such that the cellular array does not protrude from the roof. In a seventh example of the system, optionally including one or more or each of the first through sixth examples, the radar array is etched into the circuit board. In an eighth example of the system, optionally including one or more or each of the first through seventh examples, the radar and cellular system is communicatively coupled to other systems via a single communication interface communicatively coupled to the circuit board.

The disclosure also provides support for a vehicle, comprising: a domain controller, and a radar and cellular system, comprising: a circuit board with layers including a top, a bottom, and a separating layer interposed between the top and the bottom, a radar array electrically coupled to the bottom and adapted to transmit and receive radar signals towards an interior of the vehicle, a cellular array electrically coupled to the top and adapted to transmit and receive cellular signals towards an exterior of the vehicle, an auxiliary processor adapted to control transmission and reception of the radar signals and the cellular signals without communication with the domain controller, and a single power source (PS) adapted to supply power for transmitting the radar signals and the cellular signals. In a first example of the system, the auxiliary processor includes instructions stored in memory thereof that when executed cause the radar and cellular system to operate in a radar degradation mode in response to the radar array experiencing degradation, or to operate in a cellular degradation mode in response to the cellular array experiencing degradation. In a second example of the system, optionally including the first example, the radar and cellular system is communicatively coupled to the domain controller via a single communication interface such that the radar array and the cellular array are directly communicatively coupled to each other and share the single communication interface. In a third example of the system, optionally including one or both of the first and second examples, the radar and cellular system further comprises a filtering system comprising a cellular filter adapted to filter the cellular signals and a radar filter adapted to filter the radar signals, and wherein the cellular filter and the radar filter are low-pass, high-pass, or band-pass filters according to frequency bands of an opposite signal type.

The disclosure also provides support for a method for operating a radar and cellular system, comprising: transmitting outgoing signals, including outgoing cellular signals and outgoing radar signals, wherein transmitting outgoing signals comprises: generating the outgoing signals, prioritizing the outgoing signals, filtering the outgoing signals with a filtering system, and sending the filtered, prioritized outgoing signals via transmitters of a cellular array and a radar array, and receiving incoming signals, including incoming cellular signals and incoming radar signals, wherein receiving signals comprises: detecting the incoming signals with receivers of the cellular array and the radar array, and interpreting and responding to the incoming signals. In a first example of the method, prioritizing the outgoing signals comprises: assigning a weighted priority value to each outgoing signal, and ordering the outgoing signals according to the weighted priority value. In a second example of the method, optionally including the first example, the weighted priority value is weighted based on occurrence of the outgoing signals, frequency of the outgoing signals, power demand, and type of the outgoing signals. In a third example of the method, optionally including one or both of the first and second examples, the method further comprises synchronizing the outgoing signals. In a fourth example of the method, optionally including one or more or each of the first through third examples, filtering the outgoing signals comprises applying a cellular filter to cellular signals and applying a radar filter to radar signals. In a fifth example of the method, optionally including one or more or each of the first through fourth examples, interpreting and responding to the incoming signals comprises performing diagnostics. In a sixth example of the method, optionally including one or more or each of the first through fifth examples, performing diagnostics comprises: allowing crosstalk between the cellular array and the radar array, analyzing the crosstalk for indication of degradation, maintaining operation if no components are experiencing degradation, or if one or more components are experiencing degradation, determining a degradation mode and operating the radar and cellular system in the degradation mode.

FIGS. 1-11 show schematics of an example configuration with relative positioning of the various components. As used herein, the terms "approximately" is construed to mean plus or minus five percent of the range unless otherwise specified.

If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. Moreover, the components may be described as they relate to reference axes included in the drawings.

Features described as axial may be approximately parallel with an axis referenced unless otherwise specified. Features described as counter-axial may be approximately perpendicular to the axis referenced unless otherwise specified. Features described as radial may circumferentially surround or extend outward from an axis, such as the axis referenced, or a component or feature described prior as being radial to a referenced axis, unless otherwise specified.

Features described as longitudinal may be approximately parallel with an axis that is longitudinal. A lateral axis may be normal to a longitudinal axis and a vertical axis. Features described as lateral may be approximately parallel with the lateral axis. A vertical axis may be normal to a lateral axis and a longitudinal axis. Features described as vertical may be approximately parallel with a vertical axis.

It will be appreciated that the configurations and routines disclosed herein are exemplary in nature, and that these specific embodiments are not to be considered in a limiting sense, because numerous variations are possible. Moreover, unless explicitly stated to the contrary, the terms "first," "second," "third," and the like are not intended to denote any order, position, quantity, or importance, but rather are used merely as labels to distinguish one element from another. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A radar and cellular system, comprising:
a circuit board with layers including a top, a bottom, and a separating layer interposed between the top and the bottom;
a radar array electrically coupled to the bottom and adapted to transmit and receive radar signals;
a cellular array electrically coupled to the top and adapted to transmit and receive cellular signals;
a single central processing unit (CPU) adapted to control the radar signals and the cellular signals; and
a single power source (PS) adapted to supply power for transmitting the radar signals and the cellular signals.

2. The radar and cellular system of claim 1, wherein the separating layer comprises a dielectric material to reduce undesired interference between the radar signals and the cellular signals.

3. The radar and cellular system of claim 1 or 2, wherein one or more channels extend through the separating layer to allow crosstalk between the radar signals and the cellular signals.

4. The radar and cellular system of any preceding claim, further comprising a radar module communicatively coupled to the radar array and a cellular module communicatively coupled to the cellular array.

5. The radar and cellular system of any preceding claim, further comprising a combined radar and cellular module communicatively coupled to both the cellular array and the radar array.

6. The radar and cellular system of any preceding claim, wherein the cellular array is configured as a satellite array protruding from a roof of a vehicle where the radar and cellular system is installed.

7. The radar and cellular system of any preceding claim, wherein the cellular array is configured as a conformal antenna array shaped and arranged according to a geometry of a roof of a vehicle where the radar and cellular system is installed such that the cellular array does not protrude from the roof.

8. The radar and cellular system of any preceding claim, wherein the radar array is etched into the circuit board.

9. The radar and cellular system of any preceding claim, wherein the radar and cellular system is communicatively coupled to other systems via a single communication interface communicatively coupled to the circuit board.

10. A method for operating a radar and cellular system, comprising:
transmitting outgoing signals, including outgoing cellular signals and outgoing radar signals, wherein transmitting outgoing signals comprises:
generating the outgoing signals;
prioritizing the outgoing signals;
filtering the outgoing signals with a filtering system; and
sending the filtered, prioritized outgoing signals via transmitters of a cellular array and a radar array;
and
receiving incoming signals, including incoming cellular signals and incoming radar signals, wherein receiving signals comprises:
detecting the incoming signals with receivers of the cellular array and the radar array; and
interpreting and responding to the incoming signals.

11. The method of claim 10, wherein prioritizing the outgoing signals comprises:
assigning a weighted priority value to each outgoing signal; and
ordering the outgoing signals according to the weighted priority value.

12. The method of claim 11, wherein the weighted priority value is weighted based on occurrence of the outgoing signals, frequency of the outgoing signals, power demand, and type of the outgoing signals.

13. The method of any of claims 10 to 12, wherein the method further comprises synchronizing the outgoing signals.

14. The method of any of claims 10 to 13, wherein filtering the outgoing signals comprises applying a cellular filter to cellular signals and applying a radar filter to radar signals.

15. The method of any of claims 10 to 14, wherein interpreting and responding to the incoming signals comprises performing diagnostics, and performing diagnostics comprises:
allowing crosstalk between the cellular array and the radar array;
analyzing the crosstalk for indication of degradation; and
maintaining operation if no components are experiencing degradation, or if one or more components are experiencing degradation, determining a degradation mode and operating the radar and cellular system in the degradation mode.
